# EUROPÄISCHE PATENTANMELDUNG

(11) **EP 4 620 314 A1**
(43) Veröffentlichungstag der Anmeldung: **24.09.2025**
(21) Anmeldenummer: 24164483.0
(22) Anmeldetag: 19.03.2024
(51) Int. Cl.: A23P 20/20, A23J 3/22, A23P 30/25

(54) **VORRICHTUNG UND VERFAHREN ZUM HERSTELLEN VON MARMORIERTEN LEBENSMITTELN**

(71) Anmelder: Albert Handtmann Maschinenfabrik GmbH & Co. KG, 88400 Biberach (DE)
(72) Erfinder: KAMMERER, Steffen, 88214 Ravensburg (DE); HEMRICH, Leo, 97237 Altertheim (DE); NUSSER, Marcel, 88471 Laupheim (DE); BAECHTLE, Manfred, 88433 Schemmerhofen (DE)
(74) Vertreter: Grünecker Patent- und Rechtsanwälte PartG mbB

(57) **Zusammenfassung**

Die Erfindung betrifft eine Vorrichtung (1) sowie ein Verfahren zum Herstellen von marmorierten Lebensmitteln (2), insbesondere Fleischersatzprodukten, umfassend: ein Gehäuse (3) mit einem Einlass (4) für einen Grundmassestrom (5), mehrere Düsen (7a, 7b, 7c) zum Einspritzen mehrerer Zusatzmasseströme in den Grundmassestrom (6) sowie einem Auslass (8) für das marmorierte Lebensmittel (2), das eine marmorierte Struktur der pastösen Zusatzmasse in der Grundmasse aufweist.

## Beschreibung

Die Erfindung betrifft eine Vorrichtung und ein Verfahren zum Herstellen von marmorierten Lebensmitteln gemäß den Oberbegriffen der Ansprüche 1 und 14.

Fleischersatzprodukte, insbesondere vegane Fleischalternativen, gewinnen mehr und mehr an Bedeutung. Bei der Herstellung solcher Fleischersatzprodukte werden pastöse, pflanzliche, oft mit Fasern versetzte Massen entweder händisch oder maschinell in Form gebracht und entsprechende Marmorierungsstrukturen eingebracht. Diese Produkte werden in ihrer Außengeometrie, aber auch ihrem Querschnitterscheinungsbild möglichst realitätsgetreu einem tierischen Vergleichsprodukt nachempfunden. Diese tierischen Vergleichsprodukte weisen neben gut sichtbaren Fettstrukturen zwischen den einzelnen Muskelfasern auch innerhalb des Muskelfleisches feine unregelmäßige Marmorierungsstrukturen auf.

Diese Fettstrukturen liegen als sogenannte intramuskuläre Fettmarmorierungen vor. Sollen tierische Produkte realitätsgetreu nachempfunden werden, sind diese Strukturen unerlässlich. Je nach Tierart und Rasse können die feinen Fettstrukturen in geringem, aber auch in sehr hohem Maße vorliegen. Die Fettstrukturen verteilen sich über den gesamten Produktquerschnitt.

Es ist bereits aus der WO 2022/157584 A2 bekannt, eine Zweitmasse in eine zuvor hergestellte faserige Grundmasse einzubringen. Die Grundmasse stellt hier die Fleischersatzmasse dar. Diese wird in einem vorgelagerten Prozess hergestellt. Durch Walzen, Lockern und Marinieren entsteht eine realistisch anmutende Masse. Das Walzprodukt sorgt dafür, dass diese Masse als flache Matte vorliegt. Auf diese flache ausgerollte Grundmasse wird eine Zweitmasse, das heißt die Fettersatzmasse, aufdosiert. Durch anschließendes Aufrollen des flachen Produkts und Eintreten der Zweitmasse in die Zwischenräume der Fasern entsteht ein gemustertes Produktbild. Dieses Querschnittsbild ähnelt z.B. einem realen Rinderfilet mit Marmorierungsstruktur.

Dieses bekannte Herstellverfahren zur Erzeugung veganer Fleischalternativen ermöglicht keinen kontinuierlichen Herstellungsprozess, da manuelle Arbeitsschritte notwendig sind. Insgesamt ist das Herstellverfahren aufwendig und kostenintensiv. Dadurch, dass es sich um einen diskontinuierlichen Prozess handelt, ist die Stundenleistung sehr gering, was wiederum zu hohen Kosten für den Endverbraucher führt. Weiter ist die Bandbreite an verwendbaren Massen sehr eingeschränkt. Eine prozesssichere Anpassung der Verteilung der Zweitmasse über den Produktquerschnitt hinweg ist nur bedingt möglich. Das Gleiche gilt für das Anpassen der Volumenverhältnisse zwischen Grundmasse und Zweitmasse. Insgesamt ist der Prozess kompliziert und aufwendig.

Weiter gibt es im Stand der Technik bereits sogenannte Coextrusionsdüsen, über die gleichzeitig eine Innen- und eine Außenmasse extrudiert werden, um beispielsweise Wurstprodukte mit Käsefüllung herzustellen. Die bekannten Coextrusionsdüsen erlauben allerdings keine Marmorierungsstruktur.

Hiervon ausgehend liegt der vorliegenden Erfindung die Aufgabe zugrunde, eine verbesserte Vorrichtung und ein verbessertes Verfahren bereitzustellen, die auf einfache, kontinuierliche und flexible Art und Weise ermöglichen, marmorierte Lebensmittel, insbesondere Fleischersatzprodukte herzustellen.

Erfindungsgemäß wird diese Aufgabe durch die Merkmale der Ansprüche 1 und 14 gelöst.

Die erfindungsgemäße Vorrichtung zum Herstellen von marmorierten Lebensmitteln, insbesondere Fleischprodukten, umfasst ein Gehäuse mit einem Einlass für einen Grundmassestrom, eine oder mehrere Düsen zum Einspritzen mehrerer Zusatzmasseströme in den Grundmassestrom sowie einen Auslass für das marmorierte Lebensmittel, das eine marmorierte Struktur der pastösen Zusatzmasse in der Grundmasse aufweist.

Die erfindungsgemäße Vorrichtung ermöglicht die kontinuierliche Produktion eines marmorierten Lebensmittels, indem während des Herstellungsprozesses mehrere Zusatzmasseströme dem erzeugten Grundmassestrom zudosiert werden können, sodass eine kontinuierliche Produktion möglich ist. Die Grundmasse ist beispielsweise die Fleischersatzmasse. Es ist möglich die Zusatzmasseströme kontinuierlich oder auch gepulst zuzuführen. Somit können mehrere Einzelstränge der Zusatzmasse gekapselt im Grundmassestrom erzeugt werden, so dass ein marmoriertes Muster, d.h. eine marmorierte Struktur der pastösen Zusatzmasse in der Grundmasse auf einfache Art und Weise entsteht. Durch die Bewegung der Grundmasse und der Zusatzmasse im Gehäuse kommt es auch zu einer Auslenkung der Einzelstränge (relativ zur Hauptströmungsrichtung von Einlass zu Auslass) was zu einer ansprechenden naturgetreuen marmorierten Struktur im Lebensmittelquerschnitt führt.

Zum Erzeugen des Grundmassestroms bzw. der Zusatzmasseströme kann der Einlass und der Auslass des Gehäuses mit entsprechenden Füllmaschinen oder Pumpen etc. verbunden werden. Dadurch, dass das Gehäuse mehrere Düsen aufweist, bringt die Vorrichtung ein hohes Maß an Flexibilität, Hygiene und Einfachheit mit. Die erfindungsgemäße Vorrichtung kann schnell und einfach an entsprechenden Füllmaschinen bzw. Pumpeinrichtungen montiert werden. Die verwendeten Komponenten erfüllen auch die anspruchsvollen Hygieneanforderungen in der Lebensmitteltechnik und ermöglichen eine einfache Reinigung bei gleichzeitiger Robustheit. Durch die initiale Einspritzung des Zusatzmassestroms in den Grundmassestrom resultiert zur Herstellung der Marmorierungsstruktur nur eine geringe mechanische Belastung der Produkte.

Grundsätzlich ist die vorliegende Erfindung geeignet für Grundmasse und Zusatzmasse in Form von Fleischersatzmasse bzw. nicht tierischer Masse, aber auch für hybride Lebensmittel die zum Teil nicht tierische Masse und zum Teil tierische Masse aufweisen.

Gemäß einem bevorzugten Ausführungsbeispiel ragt die Düse oder Düsen seitlich in das Gehäuse hinein. Das Gehäuse hat also eine Vorderseite an der die Grundmasse zugeführt wird und eine Rückseite an der die marmorierte Grundmasse das Gehäuse verlässt und dazwischen den Gehäuseabschnitt an dem die Düse oder Düsen seitlich in das Gehäuse bzw. die Gehäusewandung hineinragen. Somit ist es möglich, dass die Zusatzmasse in den bereits erzeugten Grundmassestrom eingebracht oder aufgebracht wird.

Gemäß einer bevorzugten Ausführungsform ragen die Düsen derart in das Gehäuse hinein, dass die Zusatzmasseströme in den Grundmassestrom an unterschiedlichen Stellen einbringbar sind, wobei die Düsen insbesondere unterschiedlich tief und / oder von unterschiedlichen Seiten des Gehäuses in das Gehäuse hineinragen. Somit werden die Zusatzmasseströme in den Grundmassestrom an unterschiedlichen Stellen im Querschnitt betrachtet eingespritzt. Dadurch können gewünschte Marmorierungsmuster erzeugt werden. Die Düsen werden vorzugsweise vom Grundmassestrom umströmt was zu einer Verwirbelung des Grundmassestroms und des Zusatzmassestroms führt.

Das Gehäuse kann gemäß einer bevorzugten Ausführungsform einen Grundkörper und eine Zulaufleitung aufweisen, wobei die Düse oder die Düsen entweder in der Grundkörperwandung und/oder in der Zulaufleitungswandung angeordnet sind. Eine vom Grundkörper abzweigende Zulaufleitung, die beispielsweise unter einem Winkel zur Strömungsrichtung des Grundmassestroms im Grundkörper verläuft, kann aus Platzgründen vorteilhaft sein, wenn beispielsweise zum Antrieb eines dynamischen Mischers, wie nachfolgend näher beschrieben wird, Platz für eine Antriebswelle bzw. Wellendurchführung im hinteren Bereich des Gehäuses notwendig ist. Es ist aber auch möglich, dass die Vorrichtung nur einen Grundkörper aufweist.

Gemäß einem bevorzugten Ausführungsbeispiel weist die Vorrichtung einen oder mehrere statische und/oder einen oder mehrere dynamische Mischer auf, der oder die vorzugsweise in Strömungsrichtung T des Grundmassestroms stromabwärts der Düse oder Düsen angeordnet sind, um die Zusatzmasseströme zu verwirbeln. Durch diese Verwirbelung der zuvor eingespritzten Zusatzmasseströme entsteht eine unregelmäßige, feinteilige Struktur, die über den ganzen Produktquerschnitt gleichmäßig verwirbelt wird. Dabei kann bereits mit nur geringfügiger mechanischer Belastung, d.h. mit einer niedrigen Mischerdrehzahl, eine hohe Verwirbelung erzeugt werden. Alternativ oder zusätzlich kann auch ein statischer Mischer verwendet werden, der z. B. über Strömungsbrecher realisiert wird oder z. B. als Drallrohr ausgebildet ist, etc.. Wesentlich ist, dass eine zusätzliche Verwirbelung realisiert wird. Statische Mischer sind einfacher und kostengünstiger zu realisieren. Dynamische Mischer haben den Vorteil, dass durch Einstellen der Drehzahl das Aussehen der marmorierten Struktur gezielt beeinflusst werden kann.

Vorteilhafterweise kann also die Mischerdrehzahl des dynamischen Mischers variiert werden, so dass hier die gewünschte marmorierte Struktur optimiert werden kann. Darüber hinaus kann durch Einstellen der Drehzahl die Belastung auf die Grund- und Zusatzmasse angepasst werden. Weiter kann verhindert werden, dass für bestimmte Produkte eine massenspezifische Drehzahl überschritten wird, bei der die Produktphasen emulgieren würden.

Bei geeigneter Düsenanordnung und -geometrie kann je nach Produkt und dessen Anforderung auch gänzlich auf einen Mischer verzichtet werden. Es ist auch eine gepulste Zuführung der Zusatzmasse möglich was ebenso zu einer Verwirbelung führt.

Bei einer gepulsten Zuführung und/oder Verwirbelung kann auch nur eine Düse verwendet werden.

Vorteilhafterweise sind die Düsen austauschbar in Düsenaufnahmen des Gehäuses angeordnet, wobei die Düsenaufnahmen insbesondere durch Stopfen verschließbar sind. Das bedeutet, dass z.B. mehrere Düsenaufnahmen an unterschiedlichen Stellen angeordnet sind und je nach herzustellender Struktur bestimmte Positionen ausgewählt werden können, in die dann Düsen, insbesondere werkzeuglos, eingesetzt z.B. einschraubt oder eingeklippt werden können. Dies ermöglicht eine große Produktionsflexibilität und -freiheit.

Vorteilhafterweise ist die Tiefenposition der Düsen, d. h. wie tief die jeweilige Düse in das Gehäuse hineinragt, einstellbar, was zu einer noch größeren Prozessfreiheit und exaktem Anpassen der erzeugten marmorierten Struktur an ein reales Produkt führt.

Der Kunde kann also dann selbst die Position und/oder Tiefe der Stelle, an der der Zusatzmassestrom eingebracht wird, einstellen, ohne dass eine andere Vorrichtung gekauft werden muss.

Gemäß einem bevorzugten Ausführungsbeispiel weist die Vorrichtung mindestens eine Einrichtung zum Zuführen der Zusatzmasseströme auf, die vorzugsweise mindestens einen Füllstromteiler aufweist, der einen Zusatzmassestrom in mehrere Zusatzmasseströme in entsprechenden Teilleitungen aufteilt, wobei die Teilleitungen mit den Düsen verbunden sind. Die Verwendung eines Füllstromteilers ermöglicht, dass die Zusatzmasseströme jeweils den gleichen Volumenstrom aufweisen können, unabhängig davon, wo die Düse am Gehäuse angeordnet ist. Die Vorrichtung kann auch mehrere Einrichtungen zum Zuführen unterschiedlicher Zusatzmassen zu unterschiedlichen Düsen aufweisen, wodurch noch komplexere Muster erzeugt werden können.

Gemäß einer bevorzugten Ausführungsform ist am Auslass der Vorrichtung ein Aufsatz angeordnet, der im Vergleich zum Gehäuse eine größere oder kleinere Querschnittsfläche aufweist, um das marmorierte Lebensmittel zu expandieren oder zu komprimieren, in Abhängigkeit des zu erzeugenden Lebensmittels. Der Aufsatz kann vorzugsweise abnehmbar, bzw. austauschbar oder fest mit dem Gehäuse verbunden sein.

Vorzugsweise gibt es 2 bis 24 Düsen. Sollten Düsenaufnahmen vorgesehen sein, so können insbesondere 2 bis 24 Düsenaufnahmen ausgebildet sein. Die Düsen haben vorzugsweise eine Auslassfläche von 0,2-25 mm ² so dass auch sehr feine Strukturen erzeugt werden können. Die Düsen können entweder gleich große Auslassflächen aufweisen oder unterschiedlich große Auslassflächen.

Eine erfindungsgemäße Füllmaschine weist eine Vorrichtung zum Herstellen von marmorierten Lebensmitteln nach mindestens einem der Ansprüche 1 bis 11 auf, wobei die Füllmaschine einen Trichter für die Grundmasse, ein Förderwerk und einen Auslass, der mit dem Einlass der Vorrichtung verbunden ist, aufweist. Somit kann eine herkömmliche Füllmaschine, wie sie z.B. zum Erzeugen von Würsten verwendet wird, zur Herstellung von Fleischersatzprodukten verwendet werden.

Vorteilhafterweise kann dann ein Antrieb der Welle des dynamischen Mischers über einen Füllmaschinenantrieb erfolgen, so dass kein zusätzlicher Antrieb notwendig ist, was die Vorrichtung insgesamt vereinfacht.

Bei einem erfindungsgemäßen Verfahren zum Herstellen von marmorierten Lebensmitteln, insbesondere mit einer Füllmaschine nach Anspruch 12 oder 13, wird in einem Gehäuse ein Grundmassestrom erzeugt, indem zum Beispiel der Einlass des Gehäuses an eine Füllmaschine oder eine andere Fördereinrichtung angeschlossen ist. In den Grundmassestrom werden ein oder mehrere Zusatzmasseströme über jeweilige Düsen eingespritzt, so dass eine marmorierte Struktur erzeugt werden kann.

Vorteilhafterweise werden die jeweiligen Zusatzmasseströme an unterschiedlichen Stellen im Gehäuse eingespritzt, vorzugsweise an unterschiedlichen Stellen in Strömungsrichtung und/oder in Tiefenrichtung, d.h. in Richtung zur Gehäusemitte.

Vorteilhafterweise werden die Zusatzmasseströme durch mindestens einen Mischer, zum Beispiel statischen oder dynamischen Mischer, im Grundmassestrom verwirbelt.

Gemäß einem bevorzugten Ausführungsbeispiel sind die Stellen, an denen die Zusatzmasseströme in den Grundmassestrom eingespritzt werden, variabel, wobei insbesondere die Anzahl und/oder Position in Strömungsrichtung und/oder Tiefenposition der Düsen angepasst wird. Das bedeutet, dass es mehrere mögliche Aufnahmen für Düsen im Gehäuse gibt, von denen eine bestimmte Anzahl ausgewählt werden kann und auch die Position ausgewählt werden kann. Auch die Tiefenposition der Düsen kann eingestellt werden, wobei beispielsweise die Düsen in den Aufnahmen weiter in das Gehäuse bewegt, z. B. geschraubt werden können oder aber nach au-ßen bewegt werden können. Somit ist eine individuelle Einstellung von unterschiedlichen Mustern möglich.

Vorteilhafterweise ist der Volumenstrom der Zusatzmasseströme einstellbar, insbesondere über einen Füllstromteiler oder über Drosseln an den Zuläufen der Düsen, wobei vorzugsweise der Volumenstrom in allen Düsen im Wesentlichen konstant ist (was einfach mit einem Füllstromteiler realisierbar ist). Der Volumenstrom aller Düsen muss nicht gleich sein. Bei geeigneter Dimensionierung der Düsen und deren Zuläufe kann gänzlich auf einen Füllstromteiler verzichtet werden.

Vorteilhafterweise ist das Verhältnis des Grundmassestroms zu den jeweiligen Zusatzmasseströmen einstellbar, worüber die Stärke der Marmorierung einstellbar ist und der Herstellungsprozess an unterschiedliche Lebensmittelmassen angepasst werden kann.

Die vorliegende Erfindung wird nachfolgend unter Bezugnahme auf die Figuren 1 bis 3 näher erläutert.
- Figur 1: zeigt grob schematisch einen Querschnitt durch eine Ausführungsform gemäß der vorliegenden Erfindung.
- Figur 2: zeigt schematisch eine Aufsicht auf eine weitere Ausführungsform gemäß der vorliegenden Erfindung.
- Figur 3: zeigt schematisch eine perspektivische Darstellung eines weiteren Ausführungsbeispiels gemäß der vorliegenden Erfindung.

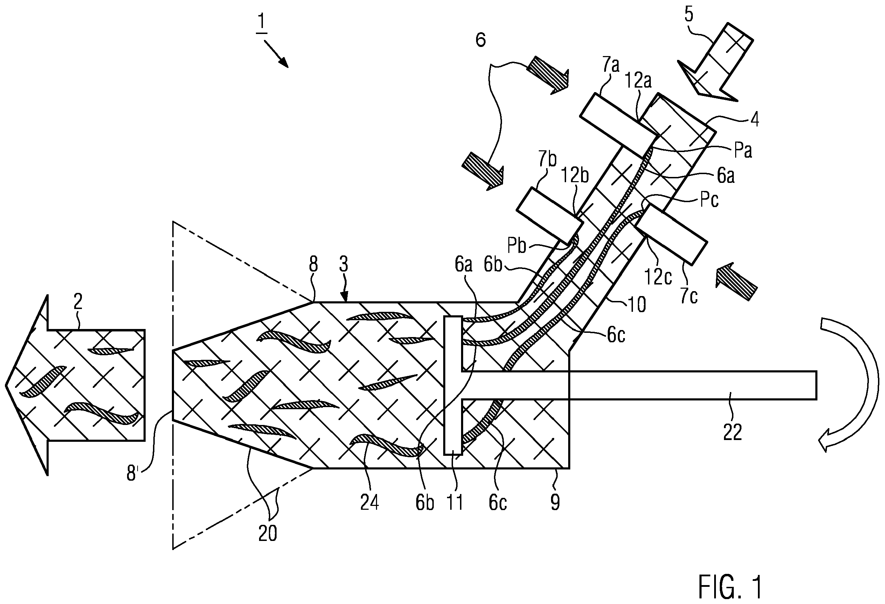

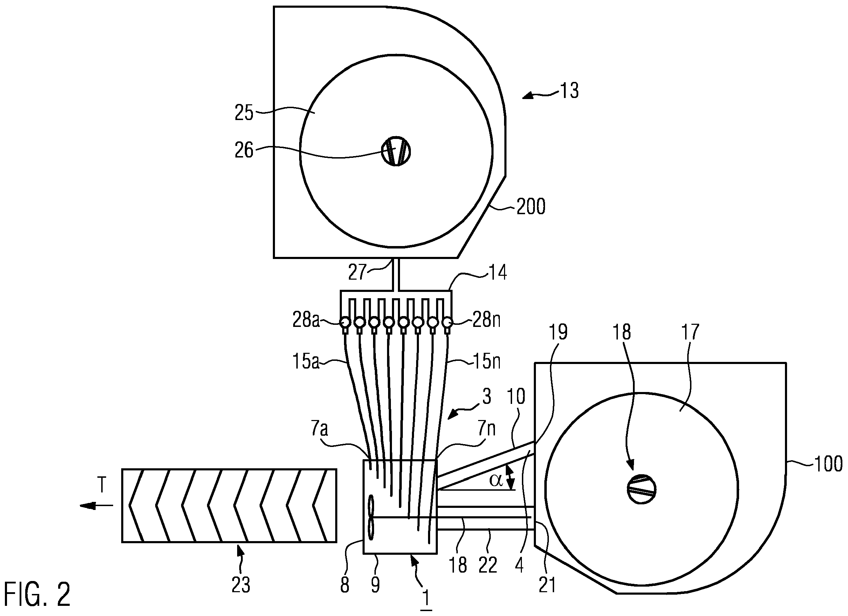

Figur 1 zeigt einen Querschnitt durch eine bevorzugte Ausführungsform gemäß der vorliegenden Erfindung. Die Vorrichtung zum Herstellen eines marmorierten Lebensmittels 2 weist ein Gehäuse 3 auf, das hier beispielsweise einen Grundkörper 9 und eine Zulaufleitung 7 aufweist. Dies ist allerdings nur beispielhaft. Das Gehäuse 3 weist einen Einlass 4 für einen Grundmassestrom 5 eines pastösen Lebensmittels auf. Ein entsprechendes Lebensmittel kann beispielsweise eine pastöse Masse, insbesondere eine Fleischersatzmasse sein. Dieser Einlass 4 kann mit einer Zuführeinrichtung für den Grundmassestrom verbunden sein. Vorteilhafterweise ist der Einlass 4 mit einem Auslass 19 einer Füllmaschine 100, wie sie auch in Figur 2 dargestellt ist, verbunden. Eine solche Füllmaschine wird beispielsweise zur Wurstherstellung verwendet und weist zum Beispiel einen Trichter 17 für die Grundmasse auf und ein Förderwerk 18, zum Beispiel eine Flügelzellenpumpe oder eine Schneckenpumpe, wobei das Förderwerk 18 den Grundmassestrom 5 über den Einlass 4 in das Gehäuse 3 fördert, wie durch den Pfeil in Figur 1 dargestellt ist.

Wie weiter in Figur 1 erkannt werden kann, weist das Gehäuse 3 auch einen Auslass 8 für das marmorierte Lebensmittel 2 auf, wobei das Lebensmittel 2 entweder das Gehäuse am Auslass 8 verlässt oder aber am Auslass 8 ein Aufsatz 20 angeordnet ist, der im Vergleich zum Gehäuse 3 eine kleinere oder gestrichelt dargestellt größere Querschnittsfläche aufweist, um das marmorierte Lebensmittel zu expandieren oder zu komprimieren, wobei dann das Lebensmittel das Gehäuse 3 am Auslass 8' verlässt. Der Aufsatz 20 kann abnehmbar sein oder aber fest mit dem restlichen Gehäuse 3 verbunden sein. Das Gehäuse 3 weist mehrere Düsen 7a, 7b, 7c auf, die in diesem Ausführungsbeispiel im Bereich der Zulaufleitung 10 des Gehäuses 3 angeordnet sind. Die Düsen dienen zum Zuführen mehrerer Zusatzmasseströme 6a, 6b, 6c. Eine solche Zusatzmasse kann beispielsweise eine pastöse Masse, insbesondere eine Fettersatzmasse sein.

Hier sind beispielhaft 3 Düsen dargestellt- vorzugsweise gibt es 2-24 Düsen. Aber auch eine Düse ist möglich. Die Düsen 7a, 7b, 7c ragen seitlich in den Grundmassestrom 5 hinein und werden von dem Grundmassestrom 5 umströmt. Die Düsen 7a, 7b und 7c ragen unterschiedlich tief und von unterschiedlichen Seiten in den Grundmassestrom 5. Das heißt, dass die Zusatzmasseströme an unterschiedlichen Stellen Pa, Pb, Pc in Strömungsrichtung und in Tiefenrichtung in den Grundmassestrom 5 injiziert werden. Es liegen also mehrere Einzelstränge der Zusatzmasse im Grundmassestrom 5 gekapselt vor. Die injizierte Zusatzmasse bewegt sich dann zusammen mit dem Grundmassestrom 5 in Richtung Auslass 8, 8`.

Wie auch in Figur 1 angedeutet ist, bewegen sich die Zusatzmasseströme nicht exakt geradlinig, sondern werden durch Strömungswiderstände sowie durch das Verhältnis des Volumenstroms des jeweiligen Zusatzmassestroms zu dem Volumenstrom des Grundmassestroms 5 von der Hauptströmungsrichtung abgelenkt, so dass sich eine lebendige Struktur ergibt. Entsprechendes kann bereits ausreichend sein, um eine marmorierte Struktur für z. B. ein Fleischersatzprodukt zu erzeugen. Möchte man eine noch größere Strukturierung erzielen, so ist es möglich, einen statischen und /oder dynamischen Mischer 11 im Grundmassestrom 5 vorzusehen. Die Zusatzmasse kann auch getaktet bzw. gepulst zugeführt werden, d. h. es ergeben sich unterbrochene Zusatzmasseströme 6a, 6b, 6c.

Figur 1 zeigt beispielsweise einen dynamischen Mischer 11 mit einer Mischerwelle 22, an deren Vorderseite eine Mischeinrichtung, mit z.B. Flügel, angeordnet ist. Dazu kann das Gehäuse eine Wellendurchführung aufweisen. Die Mischerwelle 22 kann z. B. über einen Füllmaschinenantrieb 21 (siehe Figur 2) angetrieben werden. Durch Drehen des Mischers kommt es zu einer gezielten Verwirbelung der Zusatzmasseströme 6a, 6b, 6c und es entsteht eine unregelmäßige feinteilige Struktur 24, welche einer Fettstruktur eines Fleisches ähnelt. Diese Struktur liegt durch die Verwirbelung im gesamten Produktquerschnitt vor. Die Drehzahl des Mischers muss so niedrig gehalten werden, dass es nicht zu einer Emulgation der beiden Produktphasen kommt. So darf die Mischerdrehzahl eine massenspezifische Drehzahl nicht übersteigen. Es können ein oder mehrere Mischer hintereinander angeordneten sein. Der dynamische Mischer kann je nach Anforderungen ein bestimmtes Drehzahlprofil abfahren - d.h. mit diskontinuierlicher Drehzahl betrieben werden. Alternativ oder zusätzlich zu dem dynamischen Mischer 11 kann auch ein statischer Mischer eingesetzt werden, wobei auch der dynamische Mischer als statischer Mischer fungieren kann, wenn er nicht angetrieben wird. Als statischer Mischer können entsprechende Strömungsbrecher im Gehäuse 3 vorgesehen werden oder das Gehäuse 3 wird beispielsweise als Drallrohr ausgebildet. Wenn ausschließlich statische Mischelemente verwendet werden, vereinfacht sich die Vorrichtung wesentlich.

Vorteilhafterweise sind in der Gehäusewandung, d. h. entweder in der Wandung des Grundkörpers 9 oder hier beispielsweise in der Wandung der Zulaufsleitung 10, Düsenaufnahmen 12a, 12b, 12c vorgesehen, in denen die Düsen 7 austauschbar angeordnet werden können, z. B. eingeschraubt werden können. Die Düsenaufnahmen können aber auch durch Stopfen verschlossen werden, wenn an dieser Stelle kein Zusatzmassestrom über eine entsprechende Düse injiziert werden soll. Das heißt, dass die Positionen und die Anzahl der verwendeten Düsen 7 eingestellt werden können. Auch die Tiefenposition der Düsen, d. h. wie tief die jeweilige Düse in das Gehäuse hineinragt, ist einstellbar, beispielsweise durch Einschrauben der Düse. Wie insbesondere auch aus Figur 1 hervorgeht, ragen die Düsen 7a, 7b, 7c unterschiedlich tief und hier auch von unterschiedlichen Seiten in das Gehäuse, so dass voneinander beabstandete Zusatzmasseströme erzeugt werden. Über die Position der Einspritzdüsen und ihre Tiefenposition kann die Verteilung der Zusatzmasse über den Querschnitt des Produkts eingestellt werden. Entsprechendes ermöglicht eine große Prozessfreiheit. Der Kunde kann ohne Zusatzteile oder eine neue Vorrichtung zu kaufen, die Strukturierung nach Wunsch anpassen.

Das marmorierte Lebensmittel 2 kann dann anschließend beispielsweise einem Förderband 23 (siehe Figur 2) übergeben werden oder aber einer Abfüllvorrichtung für Wursthüllen z.B. Kunstdarmhüllen d. h. von dem Gehäuse 3 in ein Füllrohr geschoben werden, über das eine Kunstdarmhülle befüllt wird. Das marmorierte Lebensmittel kann aber auch einem Portioniersystem übergeben werden. Auch ein händisches Portionieren und Entnehmen ist möglich. Der erzeugte Lebensmittelstrang kann beispielsweise auch durch eine nicht dargestellte Schneideinrichtung in Scheiben geschnitten werden.

Figur 2 zeigt eine weitere bevorzugte Ausführungsform gemäß der vorliegenden Erfindung, die im Wesentlichen der in Figur 1 gezeigten Ausführungsform entspricht, wobei hier eine Einrichtung 13 zum Zuführen der Zusatzmasseströme 6a, 6b, 6c dargestellt ist. Wie auch bereits zuvor erläutert, wird hier beispielsweise der Grundmassestrom 5 über die Füllmaschine 100 zum Einlass 4 der Vorrichtung 1 gefördert. Die Mischerwelle 22 wird z.B. ebenfalls über einen Antrieb 21 der Füllmaschine 100 angetrieben. Grundsätzlich wäre es aber auch möglich, dass der Antrieb über einen eigenen Antrieb, z. B. im Gehäuse 3,9erfolgt. Da hier der Antrieb über den Füllmaschinenantrieb 21 erfolgt und die Welle 22 gerade vom Maschinengehäuse, z.B. in Richtung T erstreckt, verläuft die Zulaufleitung 10 des Gehäuses 3 unter einem Winkel α zur Richtung bzw. zur Längsachse des Gehäuses T. Dies ist allerdings nur beispielhaft.

Figur 2 zeigt jetzt auch die Einrichtung 13, die hier ebenfalls eine zweite Füllmaschine 200 umfasst, die ebenfalls einen Trichter 25, ein Förderwerk 26 und einen entsprechenden Auslass 27 aufweist. Dies ist nur beispielhaft. Hier könnte auch eine andere Fördereinrichtung vorgesehen sein. Im Anschluss an den Auslass 27 ist ein Füllstromteiler 14 vorgesehen, der den Zusatzmassestrom aus der Füllmaschine 200 in mehrere Zusatzmasseströme 6a, 6b, 6c in entsprechende Teilleitungen 15a bis 15n aufteilt. Entsprechende Füllstromteiler sind aus dem Stand der Technik bekannt und weisen jeweilige Dosierelemente 28a bis 28n auf, die einen vorbestimmten Volumenstrom erzeugen. Vorteilhafterweise erzeugen die Dosiereinrichtungen 28a bis 28n einen Volumenstrom, der in allen Teilleitungen 15a bis 15n gleich ist. Die Zuleitungen 15a bis 15n sind mit entsprechenden Düsen 7a bis 7n verbunden. Wie ebenfalls in Figur 2 gezeigt ist, ragen die Düsen unterschiedlich tief in das Gehäuse 3. Durch den Füllstromteiler 14 kann gewährleistet werden, dass der Volumenstrom in allen Düsen konstant ist, unabhängig von der Position der Düsen. Als Alternative zum Füllstromteiler 14 können an den Zuläufen der Düsen 7 nicht dargestellte Drosseln angeordnet sein, um den Volumenstrom einzustellen, insbesondere über alle Düsen konstant zu halten. Die Drosseln dienen zur Feinjustage der Strömungswiderstände und Geschwindigkeiten an den Zuläufen der Düsen.

Es ist auch möglich, dass die Vorrichtung mehrere Einrichtungen 13 zum Zuführen unterschiedlicher Zusatzmassen zu unterschiedlichen Düsen aufweist, wobei dann die unterschiedlichen Zusatzmassen beispielsweise unterschiedliche Farben oder unterschiedliche Konsistenzen aufweisen.

In diesem Ausführungsbeispiel befinden sich die Düsen 7 im Grundkörper 9 des Gehäuses 3. Dies ist nur beispielhaft.

Der Volumenstrom der Grundmasse 5 kann über das Förderwerk 18 der Füllmaschine 100 eingestellt werden. Der Volumenstrom der Zusatzmasseströme 6a bis 6n kann über die Zuführeinrichtung 13, insbesondere das Förderwerk 26 der Füllmaschine und den Füllstromteiler 14 eingestellt werden, so dass das Verhältnis des Grundmassestroms zu den jeweiligen Zusatzmasseströmen einstellbar ist. Das Verhältnis wirkt sich ebenfalls auf die Struktur aus.

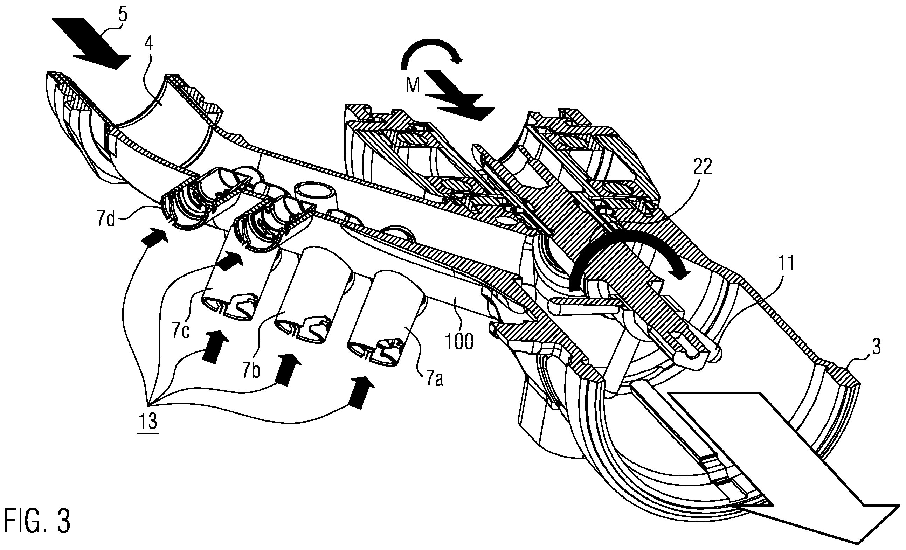

Figur 3 zeigt in perspektivischer Darstellung eine mögliche Ausführungsform mit mehreren Düsen 7 in der Zulaufsleitungswandung 10a sowie einer Mischerwelle 22, die über einen Motor M angetrieben wird. Es ist gut zu erkennen, dass die Düsen unterschiedlich weit in das Gehäuse 3 hineinragen. Der Grundmassestrom 5, in den mehrere Zusatzströme 6 injiziert wurden, strömt in diesem Ausführungsbeispiel von der Zulaufsleitung 10 in den Grundkörper 9 und wird dort über den dynamischen Mischer 11 verwirbelt.

Nachfolgend wird ein Ausführungsbeispiel eines erfindungsgemäßen Verfahrens näher erläutert.

Zunächst wird in Abhängigkeit der gewünschten marmorierten Struktur und in Abhängigkeit der verwendeten Grundmasse 5 und Zusatzmasse 6 eine bestimmte Anzahl und Position der Düsen gewählt. Auch wird eine bestimmte Tiefenposition P, d. h. die Stelle, an der der Zusatzmassenstrom injiziert wird, festgelegt bzw. optional verändert. Es wird weiter ein gewünschter Volumenstrom der Grundmasse 5, beispielsweise in der Füllmaschine 100 und ein Volumenstrom der jeweiligen Zusatzmassenströme, zum Beispiel in der Füllmaschine 200 und dem Füllstromteiler 14 festgelegt. Alternativ können die entsprechenden zuvor genannten Parameter bereits vorab festgelegt sein und die Parameter in einer Steuerung, beispielsweise der Maschinensteuerung der Füllmaschine gespeichert sein. Über eine Kommunikationsschnittstelle kann die Füllmaschine 200 auch von der Füllmaschine 100 angesteuert werden, so dass die Dosierung der Zusatzmassenströme in Abhängigkeit vom Grundmassestrom erfolgt.

Zur Herstellung des Lebensmittels wird ein Grundmassestrom 6 erzeugt, der zum Beispiel von einer Füllmaschine 100 in den Einlass 4 des Gehäuses 3 der erfindungsgemäßen Vorrichtung 1 gefördert wird. In den Grundmassestrom 6 wird dann, wie zuvor beschrieben, über die ausgewählten Düsen 7 der Zusatzmassestrom 6 injiziert. Optional wird der Grundmassestrom mit den Zusatzmasseströmen im Gehäuse 3 über einen dynamischen Mischer und/oder einen statischen Mischer verwirbelt. Dabei wird die Mischerdrehzahl insbesondere stufenlos, eingestellt, derart, dass sich eine gewünschte Struktur ergibt.

Das marmorierte Lebensmittel 2 wird dann optional am Ende des Gehäuses 4 über einen Aufsatz 20 in eine bestimmte gewünschte Form gebracht - entweder komprimiert oder expandiert und dann zum Beispiel weitertransportiert zur Weiterverarbeitung und Verpackung. Die Querschnittsfläche kann dabei kreisrund oder freiförmig sein.

Gemäß einer weiteren bevorzugten Ausführungsform erfolgt eine automatische Positionsanpassung der Düsen, beispielsweise durch ansteuerbare Ventile, d.h. Ventile können geöffnet oder geschlossen werden. Auch die Tiefenposition der Düsen kann gemäß einer bevorzugten Ausführungsform automatisch eingestellt werden, beispielsweise über einen ansteuerbaren Verstellmechanismus.

Auch die Mischerdrehzahl kann in Abhängigkeit des Volumenstroms und/oder des resultierenden Produktbildes automatisch angepasst werden. Dazu kann eine Bilderkennungseinrichtung vorgesehen sein, die die marmorierte Struktur eines Querschnitts des Lebensmittels 2 erfasst. Die Drehzahl des dynamischen Mischers kann dann derart verändert werden bis sich eine gewünschte Struktur ergibt. Dazu kann beispielsweise auch das erfasste Bild mit einem solchen Bild verglichen werden und/oder die Einstellung der Drehzahl erfolgt mittels Kl.

Das zuvor beschriebene werkzeuglose einsetzen der Düsen 7 in entsprechende Düsenaufnahmen 12 kann beispielsweise über folgende Mechanismen erfolgen: Bajonett-Verschluss, Klemmverbindung, etc.

Zusammengefasst ermöglichen die zuvor beschriebenen Ausführungsbeispiele der Erfindung folgende Vorteile:
- Einen automatisierten kontinuierlichen Extrusionsprozess zum Herstellen des marmorierte Lebensmittels 2.
- Über die Düsenposition, -anzahl, -tiefenposition und -geometrie können kundenspezifische Marmorierungsstrukturen eingebracht werden
- Die Zwangsführung der Zusatzmasse (mit Füllstromteiler) oder das Angleichen der Strömungswiderstände (ohne Füllstromteiler) z.B. über entsprechende Drosseln, führt zu einem gleichmäßigen Austreten der Zusatzmasse aus den einzelnen Düsen 7 und damit zu gleichmäßige Einzelsträngen.
- Initiale, Feineinspritzung der Zusatzmasse 6 - dadurch nur geringe mechanische Belastung der Produkte zur Herstellung der Marmorierungsstruktur nötig.
- Einfaches Anbringen der Düsen 7 an am Umfang des Gehäuses 3 angebrachten Düsenaufnahmen.
- Flexibles System und damit verbundene große Prozessfreiheit.
- Verwendung von pumpfähigen, pastösen, fließfähigen, aber auch zähen Massen möglich.
- Das Verhältnis von Grund- und Zusatzmasse kann über die Füllmaschinen 100, 200 eingestellt werden.
- Durch die Drehzahl des dynamischen Mischers 11 kann die Feinheit der Marmorierung angepasst werden. Alternativ können zusätzliche oder alleinige statische Mischer 3 ins Gehäuse eingebracht werden.
- Hygienische Bauteile die eine einfache Reinigung ermöglichen.
- Robustheit der Einzelteile.

Die zuvor gezeigten Ausführungsbeispiele weisen mehrere Düsen auf was zu einer großen Gestaltungsfreiheit führt. Es ist auch möglich die zuvor gezeigten Ausführungsbeispiele mit nur einer Düse zu realisieren insbesondere unter Verwendung von mindestens einem Mischer, da auch so eine marmorierte Struktur erzeugt werden kann.

## Patentansprüche

1. Vorrichtung (1) zum Herstellen von marmorierten Lebensmitteln (2), insbesondere Fleischersatzprodukten, umfassend:
ein Gehäuse (3) mit
einem Einlass (4) für einen Grundmassestrom (5),
eine oder mehrere Düsen (7a, 7b, 7c) zum Einspritzen eines oder mehrerer Zusatzmasseströme in den Grundmassestrom (6) sowie
einem Auslass (8) für das marmorierte Lebensmittel (2), das eine marmorierte Struktur der pastösen Zusatzmasse in der Grundmasse aufweist.

2. Vorrichtung (1) nach Anspruch 1, **dadurch gekennzeichnet, dass** die Düse oder Düsen (7a, 7b, 7c) seitlich in das Gehäuse (3) hineinragen und vorzugsweise
mehrere Düsen insbesondere derart seitlich in das Gehäuse hineinragen, dass die Zusatzmasseströme (6) in den Grundmassestrom an unterschiedlichen Stellen einbringbar sind, wobei die Düsen (7a, 7b, 7c) insbesondere unterschiedlich tief und/oder von unterschiedlichen Seiten des Gehäuses in das Gehäuse (3) hineinragen und vom Grundmassestrom umströmt werden.

3. Vorrichtung (1) nach Anspruch 1 oder 2, **dadurch gekennzeichnet, dass** das Gehäuse (3) einen Grundkörper (9) und eine Zulaufleitung (10) aufweist, wobei die Düse oder Düsen (7a, 7b, 7c) entweder in der Grundkörperwandung (9a) und/oder in der Zulaufleitungswandung (10a) angeordnet sind.

4. Vorrichtung (1) nach mindestens einem der Ansprüche 1-3, **dadurch gekennzeichnet, dass** die Vorrichtung einen oder mehrere statischen und/oder einen oder mehrere dynamische Mischer (11) aufweist, der oder die vorzugsweise stromabwärts von der oder den Düsen (7a, 7b, 7c) angeordnet sind, um den oder die Zusatzmasseströme (5) zu verwirbeln.

5. Vorrichtung (1) nach Anspruch 4, **dadurch gekennzeichnet, dass** die Mischerdrehzahl des dynamischen Mischers (11) variabel ist.

6. Vorrichtung (1) nach mindestens einem der Ansprüche 1-5, **dadurch gekennzeichnet, dass** die Düsen (7a, 7b, 7c) austauschbar in Düsenaufnahmen (12a, 12b, 12c) des Gehäuses (3) angeordnet sind, wobei die Düsenaufnahmen (12a, 12b, 12c), insbesondere durch Stopfen verschließbar sind.

7. Vorrichtung (1) nach mindestens einem der Ansprüche 1-6, **dadurch gekennzeichnet, dass** die Tiefenposition der Düse(n) d. h. wie tief die jeweilige Düse in das Gehäuse (3) hineinragt, einstellbar ist.

8. Vorrichtung (1) nach mindestens einem der Ansprüche 1-7, **dadurch gekennzeichnet, dass** die Vorrichtung (1) mindestens eine Einrichtung (13) zum Zuführen der Zusatzmasseströme (6) umfasst, die vorzugsweise mindestens einen Füllstromteiler (14) aufweist, der einen Zusatzmassestrom in mehrere Zusatzmasseströme in entsprechenden Teilleitungen (15a, 15b, 15n) aufteilt, wobei die Teilleitungen (15a, 15b, 15n) mit den Düsen (7a, 7b, 7n) verbunden sind.

9. Vorrichtung (1) nach mindestens einem der Ansprüche 1-8, **dadurch gekennzeichnet, dass** die Vorrichtung (1) mehrere Einrichtungen (13) zum Zuführen unterschiedlicher Zusatzmassen (6) zu unterschiedlichen Düsen (7a, 7b, 7c) aufweist.

10. Vorrichtung (1) nach mindestens einem der Ansprüche 1-9, **dadurch gekennzeichnet, dass** am Auslass (8) ein Aufsatz (20) angeordnet ist, der im Vergleich zum Gehäuse (3) eine größere oder kleinere Querschnittsfläche aufweist, um das marmorierte Lebensmittel zu expandieren oder zu komprimieren.

11. Vorrichtung nach mindestens einem der vorhergehenden Ansprüche, **dadurch gekennzeichnet, dass** es 2 -24 Düsen gibt, insbesondere 2-24 Düsenaufnahmen und/ oder die Auslassfläche der einzelnen Düsen in einem Bereich von 0,2-25mm ² liegt.

12. Füllmaschine (100) mit einer Vorrichtung (1) zum Herstellen von marmorierten Lebensmitteln (2) nach mindestens einem der Ansprüche 1-11, wobei die Füllmaschine einen Trichter (17), ein Fördererwerk (18) und einen Auslass (19), der mit dem Einlass (4) der Vorrichtung (1) verbunden ist, aufweist.

13. Füllmaschine (100) nach Anspruch 12, **dadurch gekennzeichnet, dass** ein Antrieb der Welle des dynamischen Mischers (11) über einen Füllmaschinen Antrieb (21) erfolgt.

14. Verfahren zum Herstellen von marmorierten Lebensmitteln, insbesondere mit einer Füllmaschine (100) nach Anspruch 12 oder 13, **dadurch gekennzeichnet, dass** in einem Gehäuse (3) ein Grundmassestrom erzeugt wird und
in den Grundmassestrom ein oder mehrere Zusatzmasseströme über jeweilige Düsen (7a, 7b, 7c) eingespritzt werden.

15. Verfahren nach Anspruch 14, **dadurch gekennzeichnet, dass** die jeweiligen Zusatzmasseströme an unterschiedlichen Stellen (P) des Gehäuses eingespritzt werden.

16. Verfahren nach Anspruch 14 oder 15, **dadurch gekennzeichnet, dass** der oder die Zusatzmasseströme durch mindestens einen Mischer (11) im Grundmassestrom verwirbelt werden.

17. Verfahren nach mindestens einem der Ansprüche 14-16, **dadurch gekennzeichnet, dass** die Stellen, an denen die Zusatzmasseströme in den Grundmassestrom eingespritzt werden, variabel sind und insbesondere die Anzahl, und/oder Position in Strömungsrichtung der Grundmasse und/oder Tiefenposition der Düsen (7a, 7b, 7c) angepasst werden, insbesondere automatisch.

18. Verfahren nach mindestens einen der Ansprüche 14-17, **dadurch gekennzeichnet, dass** der Volumenstrom der Zusatzmassenströme einstellbar ist, insbesondere über mindestens einen Füllstromteiler (14) oder über Drosseln an den Zuläufen der Düsen (7a, 7b, 7c) und vorzugsweise der Volumenstrom in allen Düsen im Wesentlichen konstant ist.

19. Füllmaschine nach Anspruch 12 oder 13, **dadurch gekennzeichnet, dass** das Verhältnis des Grundmassestroms zu dem oder den jeweiligen Zusatzmasseströmen einstellbar ist.

## Geänderte Patentansprüche

### Geänderte Patentansprüche gemäss Regel 137(2) EPÜ.

1. Füllmaschine (100) mit einer Vorrichtung (1) zum Herstellen von marmorierten Lebensmitteln (2), insbesondere Fleischersatzprodukten, wobei die Füllmaschine einen Trichter (17), ein Förderwerk (18) und einen Auslass (19), der mit einem Einlass (4) der Vorrichtung (1) verbunden ist, aufweist und wobei die Vorrichtung (1) umfasst:
ein Gehäuse (3) mit dem Einlass (4) für einen Grundmassestrom (5),
mehrere Düsen (7a, 7b, 7c) zum Einspritzen eines oder mehrerer Zusatzmasseströme in den Grundmassestrom (6) sowie
einem Auslass (8) für das marmorierte Lebensmittel (2), das eine marmorierte Struktur der pastösen Zusatzmasse in der Grundmasse aufweist wobei
der Volumenstrom der Zusatzmassenströme über mindestens einen Füllstromteiler (14) oder über Drosseln an Zuläufen der Düsen (7a, 7b, 7c) einstellbar ist.

2. Füllmaschine (100) nach Anspruch 1, **dadurch gekennzeichnet, dass** die Düsen (7a, 7b, 7c) seitlich in das Gehäuse (3) hineinragen und vorzugsweise
mehrere Düsen insbesondere derart seitlich in das Gehäuse hineinragen, dass die Zusatzmasseströme (6) in den Grundmassestrom an unterschiedlichen Stellen einbringbar sind, wobei die Düsen (7a, 7b, 7c) insbesondere unterschiedlich tief und/oder von unterschiedlichen Seiten des Gehäuses in das Gehäuse (3) hineinragen und vom Grundmassestrom umströmt werden.

3. Füllmaschine (100) nach Anspruch 1 oder 2, **dadurch gekennzeichnet, dass** das Gehäuse (3) einen Grundkörper (9) und eine Zulaufleitung (10) aufweist, wobei die Düsen (7a, 7b, 7c) entweder in der Grundkörperwandung (9a) und/oder in der Zulaufleitungswandung (10a) angeordnet sind.

4. Füllmaschine (100) nach mindestens einem der Ansprüche 1-3, **dadurch gekennzeichnet, dass** die Vorrichtung einen oder mehrere statischen und/oder einen oder mehrere dynamische Mischer (11) aufweist, der oder die vorzugsweise stromabwärts von den Düsen (7a, 7b, 7c) angeordnet sind, um die Zusatzmasseströme (5) zu verwirbeln.

5. Füllmaschine (100) nach Anspruch 4, **dadurch gekennzeichnet, dass** die Vorrichtung einen dynamischen Mischer (11) aufweist und die Mischerdrehzahl des dynamischen Mischers (11) variabel ist.

6. Füllmaschine (100) nach mindestens einem der Ansprüche 1-5, **dadurch gekennzeichnet, dass** die Düsen (7a, 7b, 7c) austauschbar in Düsenaufnahmen (12a, 12b, 12c) des Gehäuses (3) angeordnet sind, wobei die Düsenaufnahmen (12a, 12b, 12c), insbesondere durch Stopfen verschließbar sind.

7. Füllmaschine (100) nach mindestens einem der Ansprüche 1-6, **dadurch gekennzeichnet, dass** die Tiefenposition der Düsen d. h. wie tief die jeweilige Düse in das Gehäuse (3) hineinragt, einstellbar ist.

8. Füllmaschine (100) nach mindestens einem der Ansprüche 1-7, **dadurch gekennzeichnet, dass** die Füllmaschine (100) mindestens eine Einrichtung (13) zum Zuführen der Zusatzmasseströme (6) umfasst, die vorzugsweise mindestens den einen Füllstromteiler (14) aufweist, der einen Zusatzmassestrom in mehrere Zusatzmasseströme in entsprechenden Teilleitungen (15a, 15b, 15n) aufteilt, wobei die Teilleitungen (15a, 15b, 15n) mit den Düsen (7a, 7b, 7n) verbunden sind.

9. Füllmaschine (100) nach mindestens einem der Ansprüche 1-8, **dadurch gekennzeichnet, dass** die Füllmaschine (100) mehrere Einrichtungen (13) zum Zuführen unterschiedlicher Zusatzmassen (6) zu unterschiedlichen Düsen (7a, 7b, 7c) aufweist.

10. Füllmaschine (100) nach mindestens einem der Ansprüche 1-9, **dadurch gekennzeichnet, dass** am Auslass (8) ein Aufsatz (20) angeordnet ist, der im Vergleich zum Gehäuse (3) eine größere oder kleinere Querschnittsfläche aufweist, um das marmorierte Lebensmittel zu expandieren oder zu komprimieren.

11. Füllmaschine (100) nach mindestens einem der vorhergehenden Ansprüche, **dadurch gekennzeichnet, dass** es 2-24 Düsen gibt, insbesondere 2-24 Düsenaufnahmen und/ oder die Auslassfläche der einzelnen Düsen in einem Bereich von 0,2-25mm ² liegt.

12. Füllmaschine (100) nach Anspruch 1, **dadurch gekennzeichnet, dass** die Vorrichtung einen dynamischen Mischer (11) aufweist und ein Antrieb der Welle des dynamischen Mischers (11) über einen Füllmaschinen Antrieb (21) erfolgt.

13. Verfahren zum Herstellen von marmorierten Lebensmitteln, insbesondere mit einer Füllmaschine (100) nach einem der Ansprüche 1 bis 12, **dadurch gekennzeichnet, dass** in einem Gehäuse (3) ein Grundmassestrom erzeugt wird und
in den Grundmassestrom mehrere Zusatzmasseströme über jeweilige Düsen (7a, 7b, 7c) eingespritzt werden wobei
der Volumenstrom der Zusatzmassenströme über mindestens einen Füllstromteiler (14) oder über Drosseln an den Zuläufen der Düsen (7a, 7b, 7c) einstellbar ist.

14. Verfahren nach Anspruch 13, **dadurch gekennzeichnet, dass** die jeweiligen Zusatzmasseströme an unterschiedlichen Stellen (P) des Gehäuses eingespritzt werden.

15. Verfahren nach Anspruch 13 oder 14, **dadurch gekennzeichnet, dass** der oder die Zusatzmasseströme durch mindestens einen Mischer (11) im Grundmassestrom verwirbelt werden.

16. Verfahren nach mindestens einem der Ansprüche 13-15, **dadurch gekennzeichnet, dass** die Stellen, an denen die Zusatzmasseströme in den Grundmassestrom eingespritzt werden, variabel sind und insbesondere die Anzahl, und/oder Position in Strömungsrichtung der Grundmasse und/oder Tiefenposition der Düsen (7a, 7b, 7c) angepasst werden, insbesondere automatisch.

17. Verfahren nach mindestens einen der Ansprüche 13-16, **dadurch gekennzeichnet, dass** der Volumenstrom in allen Düsen im Wesentlichen konstant ist.

18. Füllmaschine nach einem der Ansprüche 1 bis 12, **dadurch gekennzeichnet, dass** das Verhältnis des Grundmassestroms zu den jeweiligen Zusatzmasseströmen einstellbar ist.
